# EUROPEAN PATENT SPECIFICATION

(11) **EP 1 350 429 B1**
(45) Date of publication and mention of the grant of the patent: **20.12.2006**
(21) Application number: 03076011.0
(22) Date of filing: 04.04.2003
(51) Int. Cl.: A01G 9/14

(54) **Device for cultivating crop in cultivation troughs**
Zuchtvorrichtung mit Zuchtträgern
Dispositif pour la culture de plantes dans des bacs de culture

(30) Priority: 04.04.2002 NL 1020306; 30.01.2003 NL 1022530
(43) Date of publication of application: 08.10.2003
(73) Proprietor: Totaal Techniek Frans van Zaal B.V., 1424 PX De Kwakel (NL)
(72) Inventor: van Zaal, Franciscus Johannes Maria, 1428 RW Vrouwenakker (NL); Kok, Johannes Adrianus, 3645 DE Vinkeveen (NL)
(74) Representative: Prins, Adrianus Willem

(56) References cited:
- EP-A- 1 183 942
- WO-A-93/05643
- GB-A- 1 576 010
- NL-A- 8 900 200
- NL-C- 1 014 378
- US-A- 4 216 615
- US-A- 4 352 256

## Description

The invention relates to an apparatus for cultivating crop in cultivation troughs, comprising supporting means that are arranged for carrying the cultivation troughs and guide means for guiding them.

Such an apparatus is known from the Dutch patent specification no. 1014378 and comprises a cultivation room in which longitudinally mobile cultivation troughs are set up. In the patent specification, a mobile cultivation trough is described that can be moved from one side of a walkway to an opposite side thereof. Because the trough can be processed from the same walkway at both ends, space is saved and the personnel need to walk less, which makes the work more efficient.

In practice, however, there is a continuing need for an increased utilization of the available cultivation surface. In addition, it has been found that, because cultivation troughs move longitudinally in relation to one another, the distance between the troughs has to be relatively large to prevent damage to and/or growing together of the crop.

The object of the invention is to reduce the abovementioned disadvantages and to provide an apparatus that offers a more efficient possibility to cultivate crop in cultivation troughs. This object is achieved by an apparatus according to the features of claim 1.

In particular, according to the invention, a roller track is provided comprising frames arranged in a supply line, which each comprise at least one guide roller for supplying a cultivation trough, which frames are movable in a direction transverse to the supply line, wherein means have been provided to vary a mutual height difference of the cultivation trough during the movement in order to place the cultivation trough on a conveyor line.

From EP1183942 a roller track is known servicing a plurality of cultivation lines of parallel-arranged cultivation troughs oriented transversely to the cultivation lines with overhanging, self supporting sets of rails. Such construction suffers from lack of robustness.

By moving the troughs in the width direction, damage to the crop is avoided, so that the troughs can be arranged relatively close to each other. Furthermore, the amount of usable cultivation surface is increased, in that in a cultivation line processing is only performed at the ends, so that a grower does not need to go into the field anymore, but can process the crop from only one position. As a result, work can be done much more efficiently and the working conditions can be improved. This can considerably increase the amount of available cultivation space. Although it is possible that the pushing up and discharging take place at the same end of a cultivation line, in a preferred embodiment the push-up and discharge positions are located at opposite ends of the cultivation line and thus the first and second end are opposite ends. Preferably, the apparatus comprises a plurality of cultivation lines of parallel-arranged cultivation troughs as well as a walkway oriented transversely to the cultivation lines. In the walkway, the roller track can be set up for longitudinally conveying a cultivation trough to a cultivation line. By means of the roller track, a trough can be conveyed to, for example, a processing room which can be separated from the cultivation room, to the cultivation line, and vice versa, or a trough can be transported to a storage and/or transfer station.

By reversing the direction of movement of the cultivation trough, the push-up elements can also be used as discharge elements. carriers are shorter than the height of the columns of the roller track. The carriers can extend in the transverse direction beyond the width of the trough, in such a manner that the carriers form a buffer element for the protection of crop in the cultivation trough.

In a preferred embodiment, the apparatus comprises a supply pipe for supplying growth-regulating substances, plant protection products and/or energy for the crop cultivation, wherein at least one cultivation trough is provided with a pipe part that comprises a coupling piece at an end, wherein the supply pipe comprises a supply part for forming a coupling with the coupling piece of the cultivation trough. Here, the coupling piece can comprise an interception element in which the supply part can be inserted and wherein the supply part comprises a circumferentially extending flexible wall that is pressed against an inner wall of the interception element under the influence of pressure due to the liquid flowing through the supply part. Such a coupling can also be used outside the context of the invention.

In a coupled condition, such coupling pieces can form a conveyor pipeline. Preferably, the coupling pieces comprise a spray piece for spraying water from a conveyor pipeline formed in a coupled condition. It is advantageous if the carriers keep the cultivation trough slightly sloping.

Further advantages and preferred embodiments of the apparatus according to the invention will be described with reference to the drawing, wherein:
Figure 1 is a diagrammatic side view of an apparatus which does not form part of the invention;
Figure 2 is a top view of a cultivation room equipped with an apparatus which does not form part of the invention;
Figure 3 is a perspective view of a first embodiment of a cultivation trough which does not form part of the invention;
Figure 4 is a perspective view of a second embodiment of a cultivation trough which does not form part of the invention;
Figure 4a is an enlargement of the coupling piece shown in Figure 4;
Figure 5 is a perspective view of a third embodiment of a cultivation trough which does not form part of the invention; and
Figure 6 is a perspective view of a (part of a) roller track for conveying the trough to a push-up point or from a discharge point which does not form part of the invention.
Figure 7 shows a diagrammatic representation of the apparatus according to the invention;
Figure 8 shows a diagrammatic representation of a coupling piece in an uncoupled condition;
Figure 9 shows a diagrammatic representation of a coupling piece in a coupled condition;
Figure 10 shows an alternative embodiment for a coupling piece; and
Figure 11 shows a diagrammatic representation of a roller track for placing a cultivation tray.

In the figures, like parts are numbered alike.

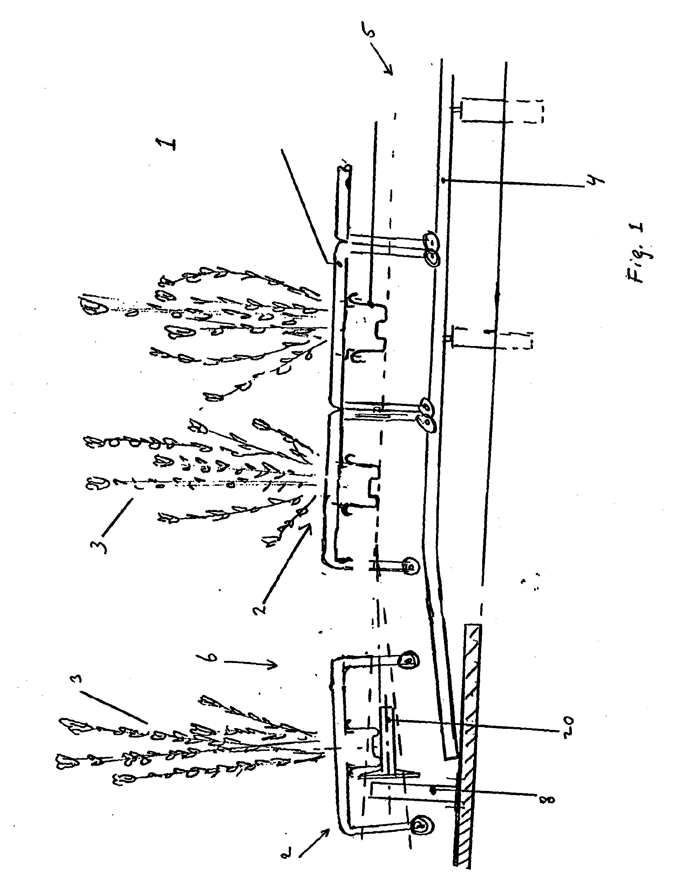

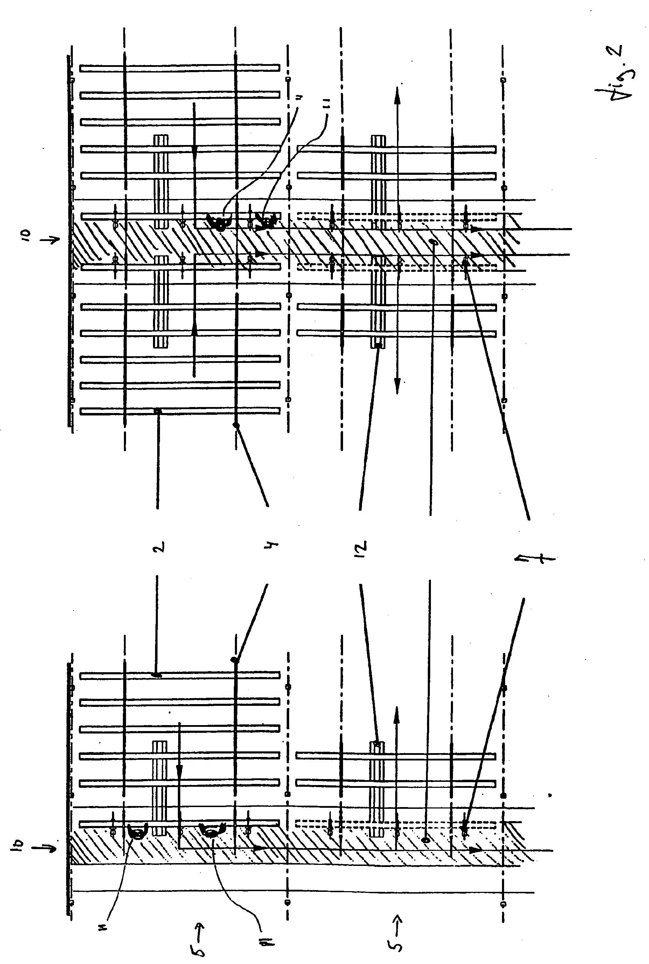

Figure 1 shows an apparatus 1 which does not form part of the invention. The apparatus 1 comprises cultivation troughs 2 for cultivating a crop 3. The cultivation troughs are supported by rails 4 that are arranged for carrying the cultivation troughs. The rails 4 serve as a guide for guiding the cultivation troughs 2 in the width direction of the cultivation trough. If tubular rails are used, these can serve as heating elements. As will be clarified with reference to Figure 2, this results in the formation of a cultivation line 5 consisting of movable cultivation troughs 2. At an end 6 of the cultivation line 5, the troughs 2 will be pushed up from a roller track 7, which is built up of columns 8, as will be discussed in more detail with reference to Figure 6.

Figure 2 shows a cultivation room 9 wherein the apparatus 1 is set up. This apparatus comprises a plurality of cultivation lines 5 of cultivation troughs 2 arranged parallel to one another. Furthermore, walkways 10 oriented transversely to the cultivation lines 5 are present, in which a roller track 7 can be set up. The walkways 10 serve as a working area, so that, at the end of a cultivation line 5, the crop can be processed by an employee 11. The cultivation troughs 2 can be longitudinally conveyed over the roller track 7 to a cultivation line 5. Furthermore, in the walkway 10, push-up elements 12 are set up for pushing up a cultivation trough 2 on a cultivation line 5. By reversing the direction of movement of the push-up element 12, this push-up element can also be used as a discharge element. This makes the application of both the fifo system (first in first out) and the lifo system (last in first out) possible. Incidentally, the pushing-up and discharging can also be done manually.

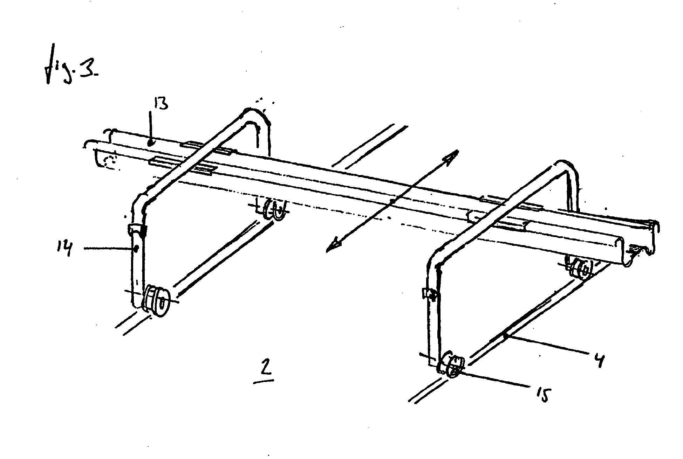

Figure 3 shows a perspective view of a cultivation trough 2. The cultivation trough 2 consists of a channel section 13 that is suspended from carrying brackets 14. The carrying brackets 14 are placed transversely to the channel section 13 and have wheels 15 at their ends that are oriented transversely to the longitudinal direction of the cultivation trough. The brackets 14 have a length greater than the height of the channel section 13. The wheels 15 are thus below the surface that is formed by the channel section 13, so when the carrying brackets 14 rest on the rails 4, the bottom of the cultivation trough 2 is freely suspended. Otherwise, the carriers are shorter than the height of the columns 8 of roller track 7, so that, as shown in Figure 1, when a cultivation trough 2 is conveyed over the bottom of the channel section 13, the carrying brackets 14 can be moved over the columns 8 and hang down freely from the sides of the cultivation trough 2. Although not shown in Figure 3, from a set of carrying brackets 14, a plurality of channel sections 13, for example two or three channel sections 13, can be suspended. Furthermore, the carrying brackets 14 extend beyond the width of the channel section 13, thereby forming a buffer element for the protection of crop in the cultivation trough. Coupling pieces in the form of a half-open tubular section have been applied to the carrying brackets. This enables the roller troughs to push one another up without the risk of derailing of the rails 4 being present. Although not shown, the coupling pieces can form a detachable connection, so that the roller troughs can be moved in both directions of the rails without becoming detached.

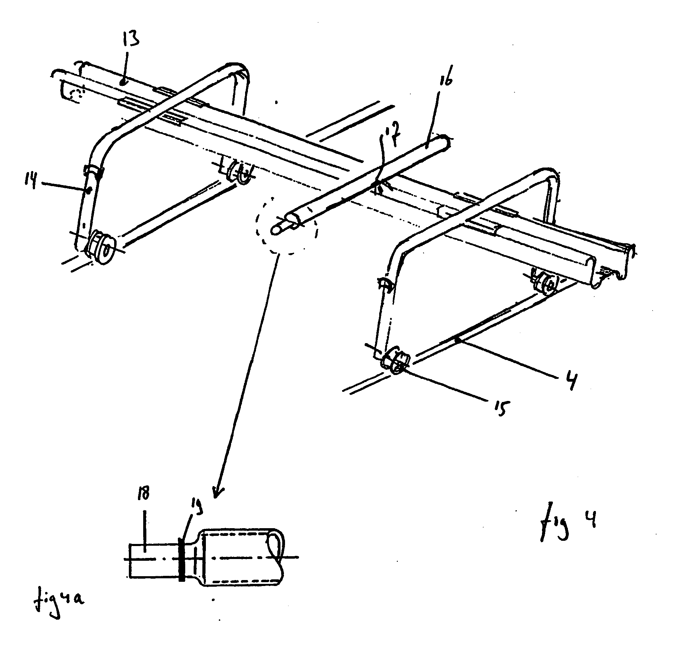

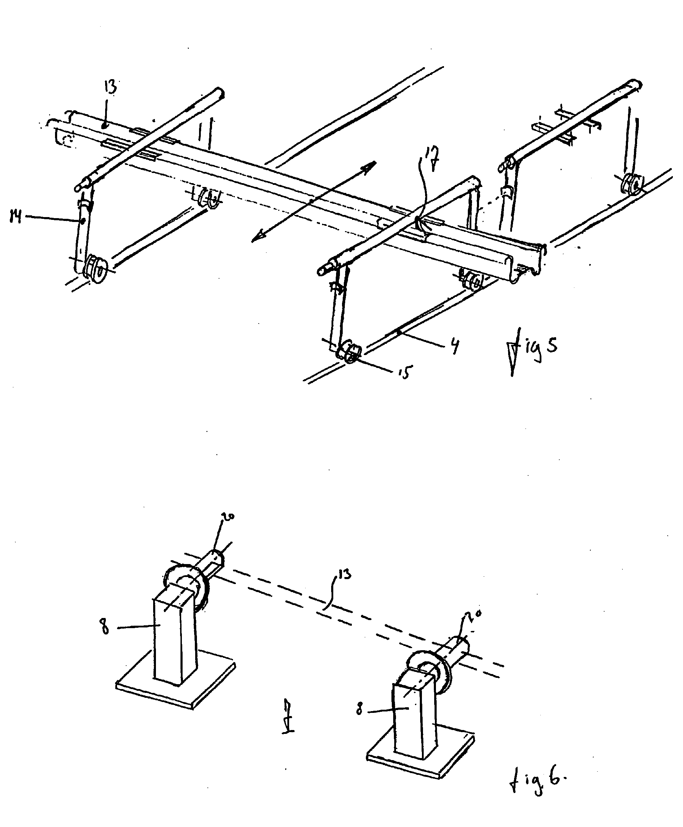

Figure 4 and Figure 4a show a modified cultivation trough, wherein a further coupling piece in the form of a tube 16 applied transversely to the channel section 13 is present. In coupled condition, the tubes 16 form a conveyor pipeline, through which, for example, water can be conveyed. The water can be sprayed from a spray piece 17 in the cultivation trough 2, so that a simple form of crop wetting is effected, without having to install separate irrigation installations in the cultivation room. Figure 4a is an enlargement of an encircled part of Figure 4, in which it is shown how the tube 16 has a reduction 18 with a sealing ring 19 at one end. The reduction 18 can be inserted into an end of a tube 6 of a neighboring cultivation trough, which also becomes clear from the arrangement of Figure 5.

Figure 5 shows an alternative form of such a modified cultivation trough, wherein the coupling piece is formed by the carrying handle itself. In operation, water can flow from a spray piece 17. By making the channel sections slightly sloping, one spray piece can be used to wet the entire cultivation trough 2.

Figure 6 shows a diagrammatic representation of the roller track 7 already shown in side view in Figure 1. The roller track 7 comprises a plurality of columns 8 spaced apart. The columns each comprise a roller 20, over which the bottom of a channel section of a cultivation trough can roll, as shown in Figure 1. At least some of the rollers can be driven by a motor. Because the cultivation troughs have a specific length, a relatively small number of columns 8 are sufficient. By placing the roller 2 slightly at an angle with the horizontal, the cultivation trough can be kept on the roller track 7.

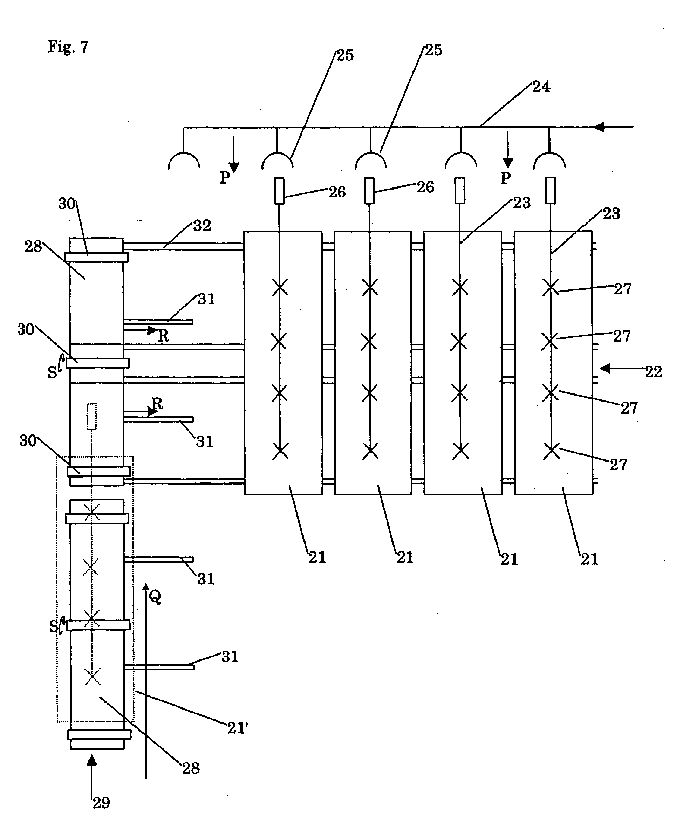

Figure 7 shows a diagrammatic representation of the apparatus according to the invention. In this figure, cultivation trays 21 have been placed that can drive over a conveyor line 22. The figure shows only one line; in an industrial design, the arrangement can comprise several substantially parallel lines. The cultivation trays 21 can be coupled but can also be separate. The cultivation trays 21 are provided with a pipe part 23 that comprises a coupling piece 26 at an end to be coupled to a supply pipe 24 that extends parallel to the conveyor line 22. The supply pipe supplies, for example, water for heating and/or feeding the crop. For easy reference, in the following, only the supply of water will be discussed, although it is clear that other substances may also be conveyed. The supply pipe 24 can also supply, for example, a gas such as carbon dioxide to stimulate growth. The supply pipe 24 can further supply plant protection products or a heating medium, such as warm water for heating the apparatus, in particular the crop therein.

Although the figure shows only one supply pipe 24, the system can be embodied in such a manner that a plurality of supply pipes 24 connect to a cultivation tray 21, wherein different media can be supplied, if desired.

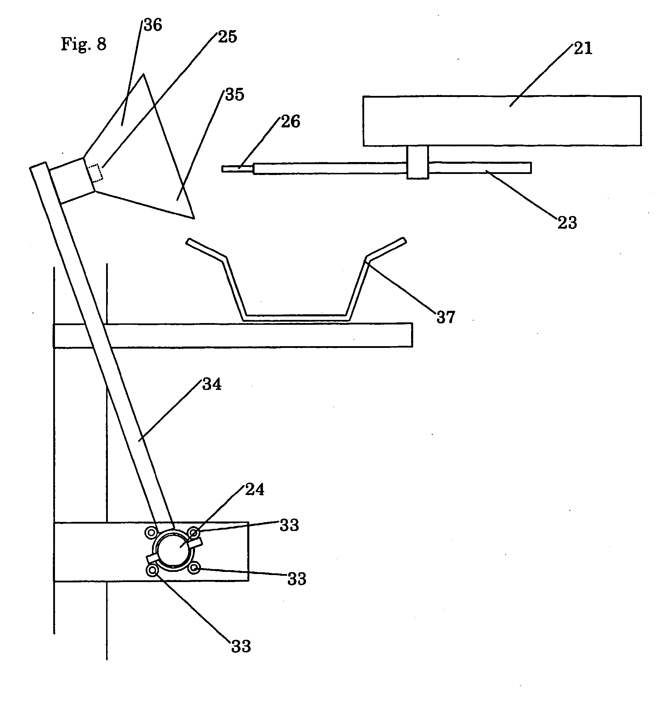

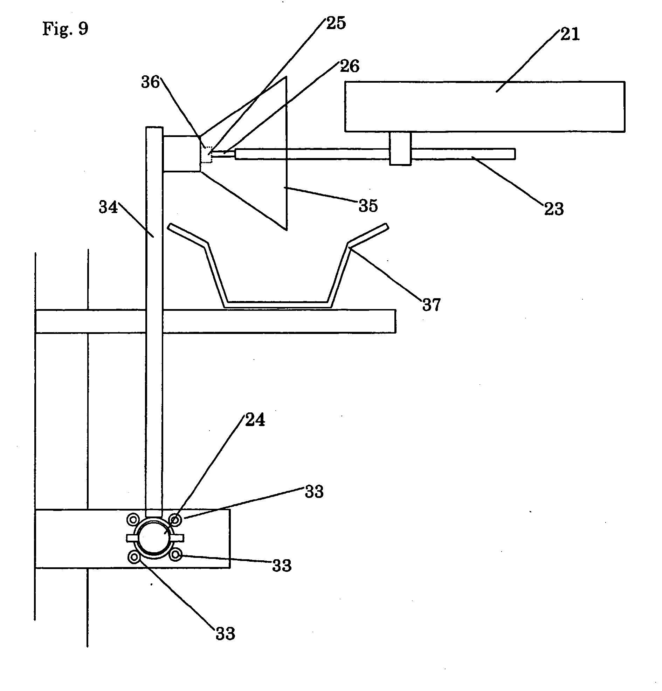

For coupling the cultivation tray to the supply pipe 24, a female coupling piece 25 is provided that can couple to a male coupling piece 26 applied to the cultivation tray. The supply pipe can be coupled to the coupling pieces 26 of the cultivation trays 21 by means of a movement elucidated with reference to Figures 8 and 9, indicated by arrows P, forming a conveyor pipeline for conveying the liquid to the cultivation trays 21. If the medium is to be dispensed to the plant, such as the dispensation of water, gas or plant protection products, in the pipe part 23, spray pieces 27 can be provided. If the pipe part serves, for example, for heating a return pipe can be provided, or the pipe part on the opposite side can also be connected to a supply pipe (not shown).

According to this construction, a pipe system can be formed dynamically and easily be deployed when needed. Furthermore, the pipe parts 23 can easily be connected to a supply pipe 24, thus realizing an efficient water distribution.

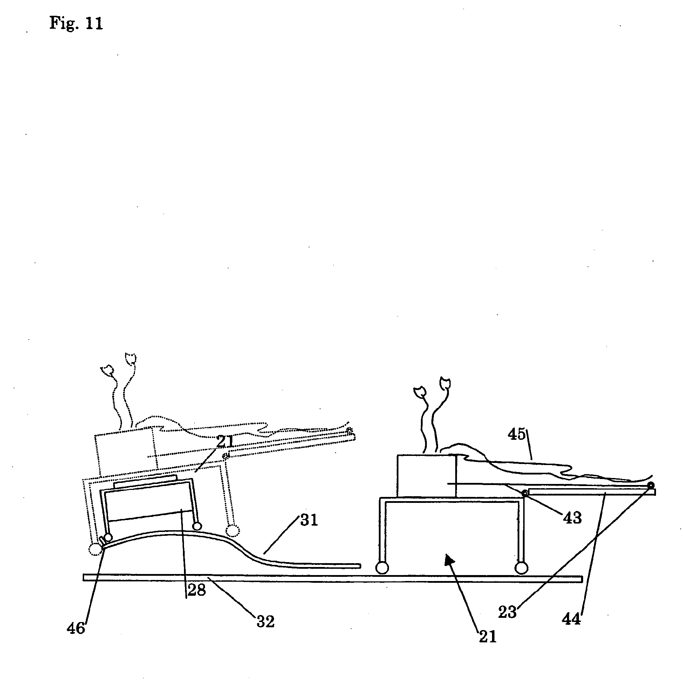

In Figure 7, in interrupted lines, a cultivation tray 21 is shown that is placed on a frame 28 and moves over this frame in the direction of arrow Q. The frames 28 are arranged for forming a supply line 29, so that the cultivation trays 21 can arrive at the right conveyor line 22 and can be placed thereon. For this purpose, the frames 28 are movable in lateral direction according to arrows R. The frames 28 comprise a guide roller 30 to let the cultivation tray roll thereover. The guide rollers 30 can be driven, for example by means of an electric drive, diagrammatically indicated by arrows S. The frames 28 move over a relatively short distance in lateral direction over guide rails 31, which differ from the conveyor rails 32 over which the cultivation trays are conveyed in the conveyor line 22. Form and function of these rails 31 will be discussed in more detail with reference to Figure 11.

Figures 8 and 9 show an embodiment for a coupling piece of a pipe part 23 of a (diagrammatically shown) cultivation tray 21. In this, the supply pipe 24 extends perpendicular to the plane shown and is rotatably mounted around bearings 33. By means of the rotatable bearings, a supply part 34 radially extending from the supply pipe can rotate around the supply pipe along a circumferential direction of a circular arc. The supply part 34 opens into a female coupling piece 25. By rotating the supply pipe from the position as shown in Figure 8 to the position shown in Figure 9, the coupling piece 25 is brought into position for coupling with a coupling piece 26 of a cultivation tray 21.

In the positions shown in Figures 8 and 9, the edge 35 of the interception part 36 is always positioned above a collecting trough 37. In order to better guide the water flow, the shape of the edge 35 can be slightly adjusted, for example to a nozzle or the like. It is sufficient, however, for the interception part to possess a circular conical or funnel shape.

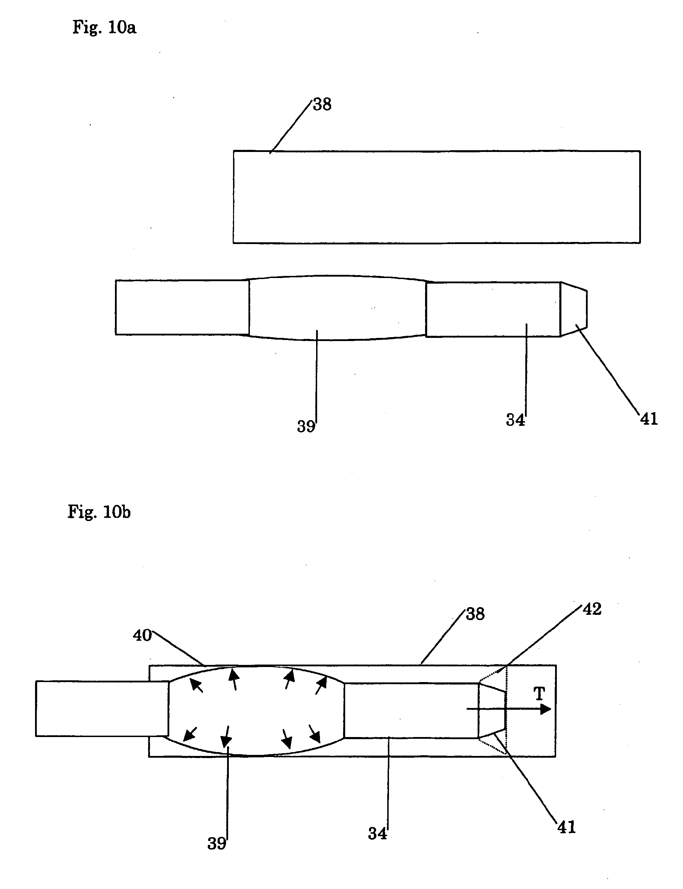

Figures 10a and 10b show an alternative embodiment for the coupling shown in Figures 8 and 9. Here, the coupling piece comprises an interception element 38 in which the supply part 34 can be inserted and wherein the supply part comprises a circumferentially extending, flexible wall 39 that is pressed against an inner wall 40 of the interception element 38 under the influence of pressure due to the liquid flowing through the supply part 34. Figure 10a shows the coupling piece 26 and the supply part 34 in an uncoupled condition. In this, the flexible wall 39 is relatively flat and the supply part 34 easily fits into the interception element 38. Some play is permitted, since this can be removed by the expansion of the flexible wall, as illustrated in Figure 10b. The flow direction of the liquid is indicated by arrow T. This flow direction is not crucial, however, as long as a means is present to build up the pressure in the inner part, especially near the flexible wall 39. In Figure 10b, this pressure is diagrammatically shown by arrows P. Furthermore, in Figure 10b, a narrowing 41 is shown in the supply part 34, increasing the pressure near the flexible wall 39. When the flow direction is reversed with respect to the arrow T, a funnel-shaped element 42 (shown in interrupted lines), for example, can direct the flow to the inner flexible wall 39, which is thereby pressured, so that the wall 39 expands and forms a seal.

Figure 11 shows a side view of the cultivation tray 21, wherein the pipe part 23 is placed to the side of the cultivation tray and connects to a secondary pipe 43 that terminates in the tray. In this manner, a so-called drip watering can be effected, without leak water being lost due to spraying from above. Furthermore, the conditioning of the temperature can provide a good climate for the roots of the crop. Incidentally, it is self-evident that the pipe parts can also be positioned at another position, for example in or above the cultivation trays. The cultivation tray 21 shown in Figure 11 has an elongated shape and comprises a screen 44 for collecting crop cultivated in the cultivation tray. Such a screen 44 has the advantage that the crop is offered a larger light surface and the crop 45 is neatly kept together during production. For processing, the tray can be simply taken off the line, because the screen prevents the crop, such as rose bushes, from becoming entangled with crop cultivated in adjacent trays. As is shown in Figure 11, the frame moves over guide rails 31 that differ from the conveyor rails 32 that are shown from above in Figure 7. The height difference makes it possible for the frames 28 to move the cultivation tray 21 in transverse direction over the conveyor rails 32 during supply. If the tray has arrived at the right place, the tray can be moved downwards, until this tray is placed on the conveyor rails and can drive up the conveyor line. In order to provide a stable position of the cultivation tray 21 during the supply, the guide rails comprise a stop 46 at an end and possess an ascending line viewed from there. Consequently, the frame 28 must initially be moved against the action of gravity in order to move it in lateral direction.

Although the invention has been discussed with reference to the abovementioned exemplary embodiments, the invention is not limited to these, but can also comprise other variations and/or modifications without deviating from the invention as limited by the claims.

Furthermore, the conveyor pipeline formed by tubes 14 as described in the exemplary embodiments which do not form part of the invention can also be used for the conveyance of other things, such as heat and/or electric energy. Such alternatives are considered to be within the scope of the invention as defined in the following claims.

## Claims

1. An apparatus for cultivating crop in cultivation troughs (21), comprising supporting means arranged for carrying the cultivation troughs and guide means for guiding thereof, wherein the guide means are arranged for guiding cultivation troughs (21) movable in the width direction, in such a manner that a cultivation line (22) of parallel-arranged troughs (21) is formed, which troughs are pushed up the cultivation line (22) at a first end, and are discharged from the cultivation line at a second end, the apparatus further comprising a plurality of cultivation lines of parallel-arranged cultivation troughs as well as a supply line (29) oriented transversely to the cultivation lines, **characterized in that** the supply line (29) comprises frames (28) which each comprise at least one guide roller (30) for supplying a cultivation trough (21) in a direction transverse to the cultivation line, which frames (28) are movable in a direction parallel to the cultivation line (22), wherein means (31) are provided for varying a mutual height difference between the cultivation trough (21) and a conveyor line (22) during the movement in order to place the cultivation trough on the conveyor line (22).

2. An apparatus according to claim 1, **characterized in that** the frame (28) is supported by guide rails (31), which guide rails (31) comprise a stop at an end and, viewed from there, possess an ascending line and then a descending line, that connects to a part that extends parallel in height with the level of the conveyor line (22).

3. An apparatus according to claims 1-2, **characterized in that** the supply line (29) comprises rollers (30) placed at an angle with respect to the horizontal.

4. An apparatus according to at least one of the preceding claims, **characterized in that** the trough comprises carriers that form a support on a surface that is below the surface formed by a bottom of the cultivation trough, so that in a condition carried by the carriers, the bottom of the cultivation trough (21) is not supported.

5. An apparatus according to claim 4, **characterized in that** the carriers are shorter than the height of the columns of the supply line.

6. An apparatus according to at least one of claims 4 or 5, **characterized in that** the carriers extend in the transverse direction beyond the width of the trough (21), in such a manner that the carriers form a buffer element for the protection of crop in the cultivation trough.

7. An apparatus according to at least one of the preceding claims, **characterized in that** the apparatus comprises a supply pipe (24) for supplying growth-regulating substances, plant protection products and/or energy for the benefit of the crop cultivation, wherein at least one cultivation trough is provided with a pipe part (16) that comprises a coupling piece (18) at the end, wherein the supply pipe comprises a supply part for forming a coupling with the coupling piece of the cultivation trough (21).

8. An apparatus according to claim 7, **characterized in that** the coupling piece (25) comprises an interception element (38) in which the supply part (34) can be inserted and wherein the supply part comprises a circumferentially extending, flexible wall (39) that is pressed against an inner wall of the interception element under the influence of pressure due to the liquid flowing through the supply part (34).

9. An apparatus according to claim 8, **characterized in that** the interception element merges into a discharge part located near an end, wherein the apparatus comprises a collecting trough (37) above which the discharge part is positioned.

10. An apparatus according to at least one of the preceding claims, **characterized in that** the supply pipe (24) is axially rotatable, wherein the supply parts extend radially from the supply pipe and, viewed from the center of the supply pipe, extend in a tangential direction and open in a coupling piece (25), in such a manner that, by rotating the supply pipe, the coupling piece is brought into position for coupling with a coupling piece of a cultivation trough (21).

11. An apparatus according to claims 7-10, **characterized in that** the pipe part comprises a spray piece (27) for spraying water from a conveyor pipeline formed in coupled condition.

## Patentansprüche

1. Vorrichtung zum Züchten von Erntepflanzen in Zuchtträgern (21), mit Tragvorrichtungen, die dafür angeordnet sind die Zuchtträger zu tragen, und Führungsvorrichtungen, um diese zu führen, wobei die Führungsvorrichtungen dafür angeordnet sind Zuchtträger (21), die in der Richtung der Breite beweglich sind, derart zu führen, dass ein Zuchtband (22) mit parallel angeordneten Zuchtträgern (21) gebildet wird, wobei die Zuchtträger an einem ersten Ende auf das Zuchtband (22) herauf geführt und an einem zweiten Ende von dem Zuchtband abgeladen werden, wobei die Vorrichtung ferner eine Vielzahl von Zuchtbändern mit parallel angeordneten Zuchtträgern sowie ein Zufuhrband (29) aufweist, das quer zu den Zuchtbändern ausgerichtet ist, **dadurch gekennzeichnet, dass** das Zufuhrband (29) Rahmen (28) aufweist, welche jeweils zumindest eine Führungsrolle (30) umfassen, um einen Zuchtträger (21) in einer quer zu dem Zuchtband liegenden Richtung zuzuführen, wobei die Rahmen (28) in einer Richtung beweglich sind, die parallel zu dem Zuchtband (22) liegt, wobei Vorrichtungen (31) vorgesehen sind, um einen gegenseitigen Höhenunterschied zwischen dem Zuchtträger (21) und einem Förderband (22) während der Bewegung zu variieren, um den Zuchtträger auf dem Förderband (22) anzuordnen.

2. Vorrichtung gemäß Anspruch 1, **dadurch gekennzeichnet, dass** der Rahmen (28) von Führungsschienen (31) getragen wird, wobei die Führungsschienen (31) an einem Ende einen Stoppvorrichtung aufweisen und von dort gesehen eine aufsteigende Bahn und dann eine absteigende Bahn aufweisen, welche sich an einen Bereich anschließt, der sich in der Höhe parallel zu der Höhe des Förderbandes (22) erstreckt.

3. Vorrichtung gemäß den Ansprüchen 1-2, **dadurch gekennzeichnet, dass** die Zufuhrbahn (29) Rollen (20) aufweist, die in einem Winkel bezüglich der Horizontalen angeordnet sind.

4. Vorrichtung gemäß zumindest einem der vorherigen Ansprüche, **dadurch gekennzeichnet, dass** der Zuchtträger Träger aufweist, welche eine Stütze auf einer Fläche bilden, die unterhalb der Fläche liegt, die von einem Boden des Zuchtträgers gebildet ist, so dass der Boden des Zuchtträgers (21) in einem von den Trägern getragenen Zustand nicht abgestützt wird.

5. Vorrichtung gemäß Anspruch 4, **dadurch gekennzeichnet, dass** die Träger kürzer ausgebildet sind als die Höhe der Säulen der Zufuhrbahn.

6. Vorrichtung gemäß zumindest einem der Ansprüche 4 oder 5, **dadurch gekennzeichnet, dass** sich die Träger in der Querrichtung über die Breite des Zuchtträgers (21) hinaus derart erstrecken, dass die Träger ein Pufferelement zum Schutz der Erntepflanzen in dem Zuchtträger bilden.

7. Vorrichtung gemäß zumindest einem der vorherigen Ansprüche, **dadurch gekennzeichnet, dass** die Vorrichtung eine Zufuhrleitung (24) zum Zuführen von wachstumsregulierenden Substanzen, Pflanzenschutzmitteln und/oder Energie zum Wohle der Emtepflanzenzucht aufweist, wobei zumindest ein Zuchtträger mit einem Rohrleitungsbereich (16) versehen ist, der ein Kupplungsteil (18) am Ende aufweist, wobei die Zufuhrleitung einen Zufuhrbereich aufweist, um eine Kupplung mit dem Kupplungsteil des Zuchtträgers (21) auszubilden.

8. Vorrichtung gemäß Anspruch 7, **dadurch gekennzeichnet, dass** das Kupplungsteil (25) ein Auffangelement (38) umfasst, in welches der Zufuhrbereich (34) eingeführt werden kann, und wobei der Zufuhrbereich eine sich über den Umfang erstreckende, biegsame Wand (39) aufweist, welche unter dem Einfluss von Druck aufgrund der durch den Zufuhrbereich (34) strömenden Flüssigkeit gegen eine Innenwand des Auffangelementes gepresst wird.

9. Vorrichtung gemäß Anspruch 8, **dadurch gekennzeichnet, dass** das Auffangelement in einen nahe einem Ende angeordneten Ableitungsbereich übergeht, wobei die Vorrichtung eine Sammelwanne (37) aufweist, oberhalb welcher der Ableitungsbereich positioniert ist.

10. Vorrichtung gemäß zumindest einem der vorherigen Ansprüche, **dadurch gekennzeichnet, dass** die Zufuhrleitung (24) axial drehbar ausgebildet ist, wobei sich die Zufuhrbereiche radial von der Zufuhrleitung aus erstrecken und sich, vom Mittelpunkt der Zufuhrleitung aus gesehen, in einer tangentialen Richtung erstrecken und sich derart in ein Kupplungsteil (25) öffnen, dass durch Drehung der Zufuhrleitung das Kupplungsteil in die Position zum Ankuppeln an ein Kupplungsteil eines Zuchtträgers (21) gebracht wird.

11. Vorrichtung gemäß den Ansprüchen 7 bis 10, **dadurch gekennzeichnet, dass** der Rohrleitungsbereich ein Sprühteil (27) aufweist zum Sprühen von Wasser aus einer im angekuppelten Zustand gebildeten Förderleitung.

## Revendications

1. Dispositif destiné à cultiver des plantes dans des bacs de culture (21) comprenant des moyens de support disposés pour supporter les bacs de culture et des moyens de guidage pour guider ceux-ci, dans lequel les moyens de guidage sont disposés pour guider des bacs de culture (21) pouvant se déplacer dans le sens de la largeur, de manière à ce qu'une ligne de culture (22) de bacs disposés parallèlement (21) soit formée, lesquels bacs sont poussés jusqu'à la ligne de culture (22) à une première extrémité, et sont évacués de la ligne de culture à une seconde extrémité, le dispositif comprenant en outre une pluralité de lignes de culture comprenant des bacs de culture disposés parallèlement ainsi qu'une ligne de distribution (29) orientée transversalement par rapport aux lignes de culture, **caractérisé en ce que** la ligne de distribution (29) comprend des cadre (28) qui comprennent chacun au moins un rouleau de guidage (30) destiné à acheminer un bac de culture (21) dans un sens transversal à la ligne de culture, lesquels cadres (28) sont mobiles dans un sens parallèle à la ligne de culture (22), dans lequel des moyens (31) sont apportés pour faire varier une différence mutuelle de hauteur entre le bac de culture (21) et une ligne de convoyeur (22) au cours du déplacement, afin de positionner le bac de culture sur la ligne de convoyeur (22).

2. Dispositif selon la revendication 1, **caractérisé en ce que** le cadre (28) est supporté par des rails de guidage (31) lesquels rails de guidage (31) comprennent une butée à une extrémité et, vus depuis cette dernière, ils présentent une ligne ascendante puis une ligne descendante, qui se raccorde à une partie qui s'étend à une hauteur parallèle au niveau de la ligne de convoyeur (22).

3. Dispositif selon les revendications 1 à 2, **caractérisé en ce que** la ligne de distribution (29) comprend des rouleaux (30) placés en angle par rapport à l'horizontale.

4. Dispositif selon l'une au moins des revendications précédentes, **caractérisé en ce que** le bac comprend des supports qui forment un support sur une surface qui est en dessous de la surface formée par un fond du bac de culture, de sorte que dans une condition supportée par les supports, le fond du bac de culture (21) ne soit pas supporté.

5. Dispositif selon la revendication 4, **caractérisé en ce que** les supports sont de hauteur inférieure à celle des colonnes de la ligne de distribution.

6. Dispositif selon l'une au moins des revendications 4 ou 5, **caractérisé en ce que** les supports s'étendent dans le sens transversal au-delà de la largeur du bac (21) de telle manière que les supports forment un élément tampon pour la protection des plantes dans le bac de culture.

7. Dispositif selon l'une au moins des revendications précédentes, **caractérisé en ce que** le dispositif comprend une conduite d'alimentation (24) destinée à acheminer des substances de croissance, des produits phytoprotecteurs et/ou de l'énergie pour le bénéfice de la culture de plantes, dans lequel au moins un bac de culture est muni d'une partie de tuyau (16) qui comprend une pièce de couplage (18) à une extrémité, dans lequel la tuyau d'alimentation comprend une partie d'alimentation destinée à former un couplage avec la pièce de couplage du bac de culture (21).

8. Dispositif selon la revendication 7, **caractérisé en ce que** la pièce de couplage (25) comprend un élément intercepteur (38) dans lequel la partie d'alimentation (34) peut être insérée et dans lequel la partie d'alimentation comprend une paroi flexible (39) s'étendant dans un sens circonférentiel, qui est poussée contre une paroi interne de l'élément intercepteur sous l'influence de la pression due au liquide s'écoulant à travers la partie d'alimentation (34).

9. Dispositif selon la revendication 8, **caractérisé en ce que** l'élément intercepteur s'intègre à une partie d'évacuation positionnée à proximité d'une extrémité, dans lequel le dispositif comprend un bac collecteur (37) au-dessus duquel est positionnée la partie d'évacuation.

10. Dispositif selon l'une au moins des revendications précédentes, **caractérisé en ce que** le tuyau d'alimentation (24) est rotatif dans un sens axial, dans lequel les parties d'alimentation s'étendent radialement à partir du tuyau d'alimentation et, vues du centre du tuyau d'alimentation, elles s'étendent dans une direction tangentielle et s'ouvrent sur une pièce de couplage (25), de telle sorte que, par rotation du tuyau d'alimentation, la pièce de couplage soit amenée en position de couplage avec une pièce de couplage d'un bac de culture (21).

11. Dispositif selon les revendications 7 à 10, **caractérisé en ce que** la partie de tuyau comprend une pièce de pulvérisation (27) destinée à pulvériser de l'eau à partir d'un tuyau de convoyeur formé dans la condition couplée.
